# EUROPEAN PATENT SPECIFICATION

(11) **EP 0 785 150 B1**
(45) Date of publication and mention of the grant of the patent: **16.10.2002**
(21) Application number: 97100142.5
(22) Date of filing: 07.01.1997
(51) Int. Cl.: B65D 83/00, A47G 19/30, B65D 81/22

(54) **Food container with dispensing means**
Lebensmittelbehältes mit Ausgabevorrichting
Récipient pour aliments avec dispositif de distribution

(30) Priority: 18.01.1996 US 576057
(43) Date of publication of application: 23.07.1997
(73) Proprietor: Dart Industries Inc., Orlando, Florida 32837 (US)
(72) Inventor: DeCoster, Pieter K.J., 9300 Aalst (BE)
(74) Representative: Howden, Christopher Andrew

(56) References cited:
- FR-A- 2 711 358
- GB-A- 2 046 583
- US-A- 2 904 205
- US-A- 3 380 592
- US-A- 4 179 040
- US-A- 4 765 482
- US-A- 5 082 135

## Description

### Background of the Invention

The invention relates to a container for use in the storing and dispensing of foodstuffs wherein the foodstuff normally comprises multiple relatively small items which are preferably individually dispensed. Examples of such foodstuffs include pickles, olives, pickled onions, cocktail sausages, cheese pieces, vegetable and fruit pieces, and the like.

Examples of such containers will be noted in the following two patents, commonly owned with the present application:

| U.S. Patent | Inventor |
|---|---|
| 4,179,040 | Bateman et al |
| 5,082,135 | DeCoster |

In each instance a vertically moveable insert is provided to elevate the foodstuff to the open upper mouth of the container to facilitate access thereto. In addition, the elevation of the foodstuff tends to remove the foodstuff from any preservative liquid or the like in the container. In DeCoster, the elevated tray, upon a slight rotation thereof relative to the receptacle, is supported in an upper dispensing position.

FR-A-2711358 discloses the use, in an open-topped container or jar for containing onions, olives or the like in a preservative liquid, of a tool received within the container or jar, the tool comprising a perforated base which normally extends across the bottom of the jar and supports the onions, olives or the like, and a handle extending from the base centrally within the jar. In an unstressed state of the tool, with the base resting on the bottom of the jar, the handle projects slightly from the upper end of the jar to allow a user to grasp the handle without wetting his or her hand with the preservative liquid, and to raise the tool, and with it the comestibles thereon, to lift such comestibles out of the liquid for grasping and removal. The base is, however, resiliently deformable to allow it to flex downwardly, and the central handle to move downwardly, when the handle is forced downwardly by fitting a lid over the top of the jar. The preamble of claim 1 is based on this prior art.

### Summary of the Invention

In accordance with the invention there is provided a food storing and dispensing container comprising a receptacle including a vertically extending peripheral wall, a closed bottom and an open top, said peripheral wall and bottom defining a receptacle interior, a carrier vertically slidable within said receptacle interior between a storage position adjacent said receptacle bottom and a dispensing position vertically spaced above said receptacle bottom, said carrier including a bottom and a handle affixed centrally to said carrier bottom and extending vertically therefrom, characterised in that said handle is hollow and includes an open upper end, and in that an implement is provided for engaging and lifting foodstuff from said receptacle interior, said implement being slidably received within said hollow handle through the open upper end thereof, and means being provided on said handle and said implement for limiting relative movement therebetween when said implement is received within said handle.

The container of the present invention, while intended for use generally in the manner of the prior art containers referred to above, incorporates features which uniquely enhance its practicability.

In the preferred embodiment, the vertically moveable internal insert or carrier has a high peripheral wall and the implement normally received within the hollow handle a removable fork or fork-like implement for selective use in removing individual foods, food slices, and the like.

In further improving the practicability of the container of the invention, it is desirable that the container or bowl on the dinner table.

In its preferred form, the container comprises an upwardly opening generally cylindrical receptacle, the insert or carrier being vertically shiftable within the receptacle from a fully inserted position for maximising the usable internal volume of the container to a stable elevated position for facilitating access to the contents of the container. The implement, when not in use, is telescopically stored within the single central stem handle of the carrier.

The bottom of the internal carrier, in the preferred embodiment, is approximately coextensive with the bottom of the container and is directly engageable thereon in the fully inserted position of the carrier. The carrier bottom preferably includes apertures therethrough which allow for the drainage of any liquids from the foodstuff as the carrier is elevated. The actual handling of the carrier is effected by the central vertically extending hollow handle or stem which preferably has opposed finger grip recesses. In the preferred embodiment, a peripheral wall of the carrier is of a height equal to approximately one half the height of the container whereby foodstuffs on and within the carrier are properly retained. The carrier wall preferably includes a series of vertical recesses formed therein which slidably engage a similar series of vertical ribs extending inward to the interior surface of the receptacle wall so as to provide a guide means for a vertical lifting of the carrier. The ribs terminate in upper shoulders which, upon an elevation of the carrier thereabove and a rotation of the carrier relative to the receptacle, support the carrier in an elevated position.

In the preferred embodiment, the dispensing implement is elongate and has a pair of piercing and/or gripping prongs on the lower end thereof. The upper end of the implement has a generally planar transverse head, the opposed sides of which are received within diametrically opposed vertical slots in the upper portion of the stem handle for both limiting the downward movement of the implement within the handle and for allowing the handle and implement to rotate as a unit.

Other features and advantages of the invention will become apparent from the more detailed description of an embodiment of the invention following hereinafter.

### Brief Description of the Drawings

Figure 1 is a perspective view of a container embodying the invention;
Figure 2 is a vertical cross-section through the container with the carrier fully recessed therein and the implement seated within the handle;
Figure 3 is a cross-sectional view similar to Figure 2 with the carrier elevated and partially rotated into supported position on the receptacle ribs;
Figure 4 is an exploded perspective view of the three components of the container;

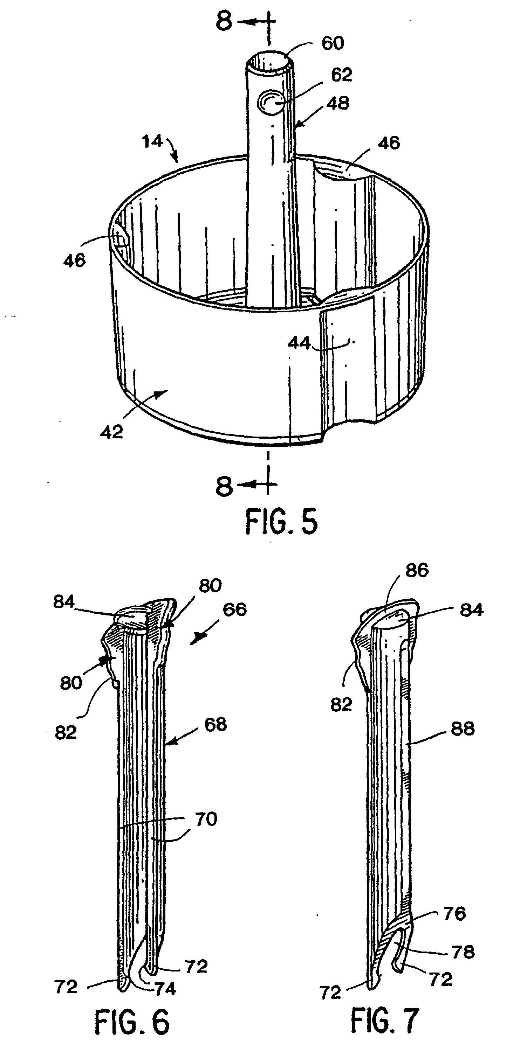

Figure 5 is a perspective view of the carrier itself;
Figure 6 is a perspective view of the fork-like implement;
Figure 7 is a further perspective view of the implement;
Figure 8 is a cross-sectional view through the carrier taken substantially on a plane passing along line 8-8 in Figure 5;
Figure 9 is a top plan view of the carrier; and
Figure 10 is a bottom plane view of the carrier.

### Description of Preferred Embodiment

Referring now more specifically to the drawings, the container 10 includes a receptacle 12, a carrier insert 14 and a food-handling utensil or implement 16. The carrier and implement combine to provide means for facilitating the dispensing of the contents of the container.

The receptacle 12 is cylindrical and includes a slightly upwardly concave, generally planar bottom 18, a peripheral wall 20 integral with the periphery of the bottom 18 and extending vertically upward therefrom, and an open top 22 defined by an outwardly flared upper rim portion 24. The peripheral wall 20 of the receptacle has the circular cross-section thereof constant or slightly outwardly tapering upwardly for the vertical height thereof for vertical sliding manipulation of the carrier 14 within the interior of the receptacle as shall be described subsequently.

The peripheral wall 20, at three equally spaced points thereabout, is provided with inwardly formed portions defining three vertically extending internal ribs 26 extending from the bottom 18 to approximately one-half of the height of the receptacle 12. These vertical ribs 26 have smooth constant cross-sections throughout the height thereof, preferably arcuate as illustrated, and terminate at the upper ends thereof in planar shoulders 30 which extend into the interior of the receptacle at a slight downward inclination. These ribs function as guides for the vertical movement of the internal carrier 14, the shoulders 30 functioning as supports for the carrier when elevated to approximately mid-height within the receptacle.

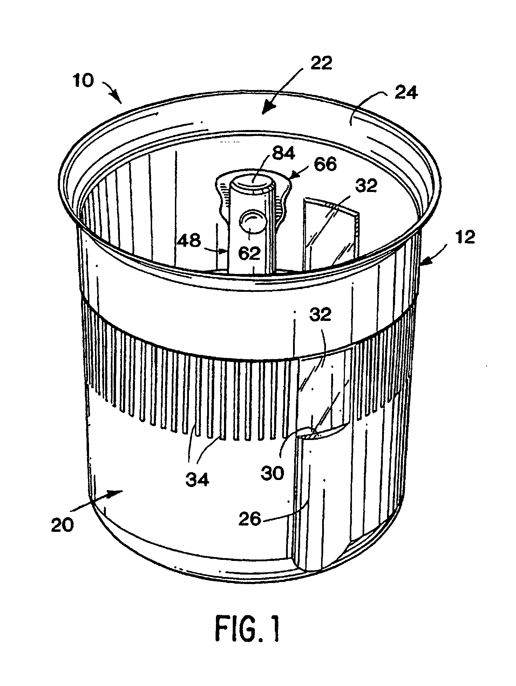

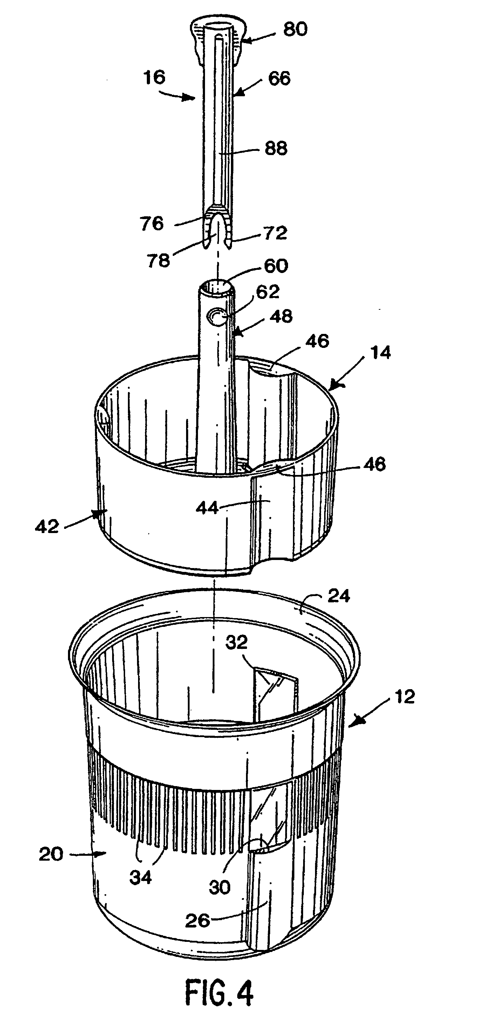

Immediately above each rib 26, and the corresponding external vertical recess formed thereby, the receptacle wall 20 includes a vertically elongate transparent viewing panel or window 32 extending for approximately one-half of the remaining height of the receptacle 12. Noting Figures 1 and 4 in particular, the receptacle wall 20, peripherally thereabout and at equal height with the panels 32, is provided with a series of spaced vertical stripes 34 of a differing surface presentation, transparency or the like, providing a distinctive presentation. The peripheral wall 20 immediately above the level of the panels 32 presents a smooth band, the outer surface of which is slightly outwardly offset, as at 36, with the band also of a distinctive surface appearance, for example slightly frosted.

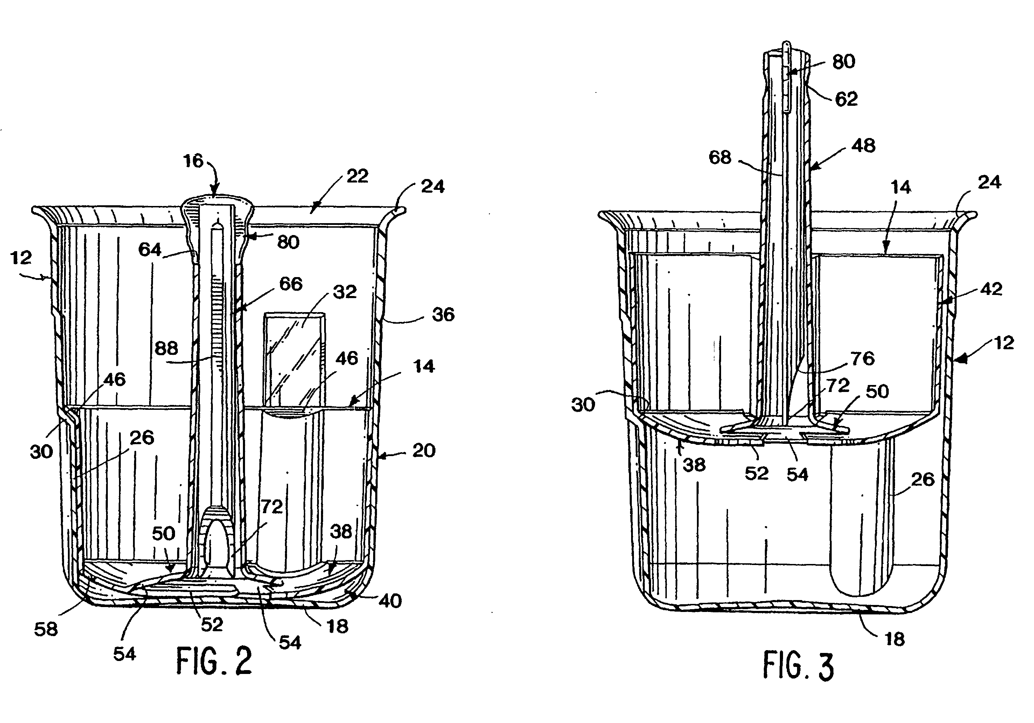

The carrier 14 is cylindrical and configured for close reception within the receptacle while being freely vertically slidable relative thereto. The carrier 14 includes a bottom support tray 38 of a downwardly generally convex configuration which, noting Figure 2 in particular, seats on the bottom 18 of the receptacle 12 with an annular fluid-accommodating space 40 defined therebetween at the outer peripheries in light of the greater curvature of the tray 38 relative to the receptacle bottom 18. The carrier further includes a substantially cylindrical peripheral wall 42 integral with the periphery of the tray 38 and extending upwardly therefrom to define an upwardly opening chamber. The combined height of the wall 42 and tray 38 is approximately one-half the height of the receptacle 12.

The peripheral carrier wall 42 includes three equally spaced vertically elongate, outwardly directly recesses 44 defined therein. The recesses are configured to conform to and slidably receive the receptacle wall ribs 26 and thus, in the illustrated embodiment, are arcuate in cross-section. Each of the recesses 44 extends upwardly through the peripheral edge portion of the bottom tray 38 for the full height of the peripheral wall 42 other than for a flat overlying top panel 46 slightly downward and inwardly inclined to conform to the top shoulder 30 of a receptacle wall rib 26. As will be appreciated from the drawings, the recesses 44 in the peripheral wall 42 form corresponding inwardly directed arcuate ribs. This is preferred to actually forming the recesses as depressions within a thicker wall, which would necessitate the use of additional material beyond what is necessary to provide the desired food-accommodating stability.

In its innermost or fully received position, the carrier 14, with the carrier recesses 44 aligned with the receptacle ribs 26, seats on the receptacle bottom 18 with the recess upper panels 46 seating on the upper shoulders 30 of the receptacle ribs 26. After the readily accessible goods from the upper portion of the container are removed, the carrier is vertically elevated to a dispensing position immediately above the receptacle ribs 26. In order to retain the carrier at this height, the carrier is slightly rotated to rotatably move the recesses 44 out of alignment with the ribs 26 whereby the peripheral edge portions of the carrier bottom 38, circumferentially away from the recesses 44, will rest on the upper inclined shoulders of the ribs 26, the slope of the carrier bottom 38 conforming to the inclination of these rib-formed shoulders 30.

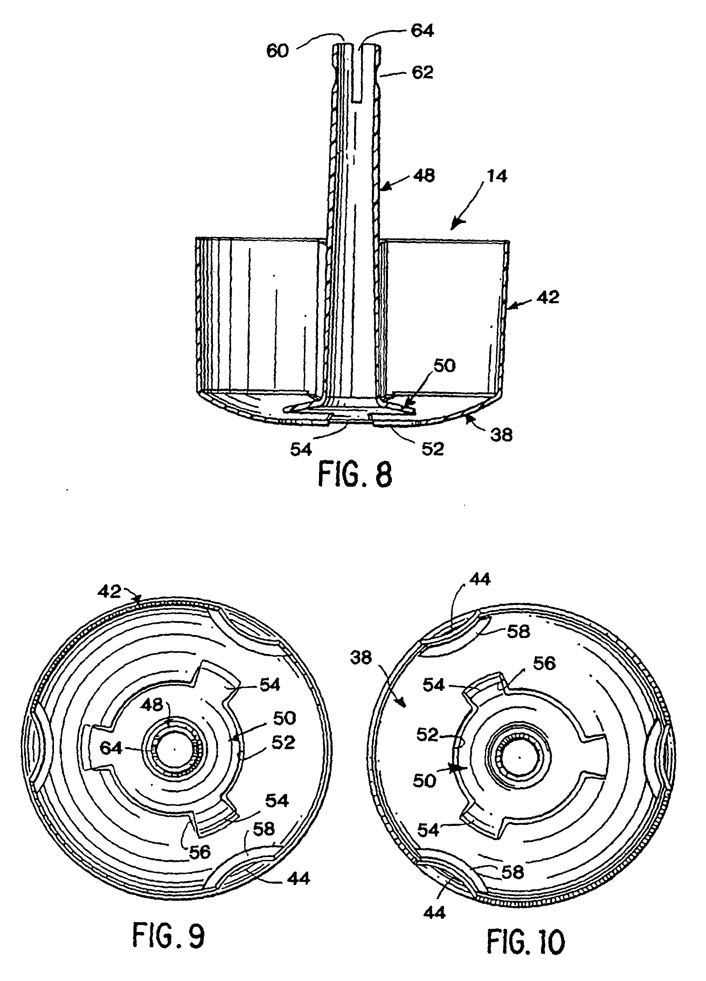

Vertical movement of the carrier 14, as well as the rotational manipulation thereof, is achieved using a central stem-like handle 48. The lower end of the stem 48 includes an integral dome-like base 50 overlying a substantially equal size central aperture 52 in the bottom 38 of the carrier 14. The base 50 is upwardly spaced from the bottom 38 and integrally formed therewith through radially extending bridge portions 54. As will be best noted from the bottom view of Figure 10, the bridge portions, following the dome configuration of the base 50, extend beyond the circular opening 52 in the bottom 38 and integrally join the bottom 38 radially outward therefrom. The circular opening 52 is in turn provided with radial open branches 56, one underlying each bridge portion 54. So formed, the base 50 can be considered to be upwardly formed from the central portion of the carrier bottom 38 and integrally retained thereto by the outer edges of the bridge portions 54, thus providing drainage apertures peripherally about the outer edges of the base 50, including along the opposed side edges of each bridge portion 54. So located, and communicating with an open fluid accommodating chamber immediately below the raised base 50, the fluid within the carrier, upon a raising of the carrier, will flow freely through the bottom of the carrier and into the progressively increasing space between the upwardly moving carrier and the bottom of the receptacle. Similar drainage openings 58 are provided through the carrier bottom 38 at the base of each recess 44, or more particularly the vertical, radially inwardly directed projection or rib formed in defining the recess. Each opening 58 follows the arc of the recess and, positioned at the outer periphery of the carrier bottom 38, also allows for liquid drainage into the annular space 40 at the periphery of the carrier bottom 38 and the receptacle bottom 18.

It is significant that the drainage openings are elongate, relatively narrow, and at the relatively protected lower end portions of the recess forming projections and the handle base, thus precluding any possibility of foodstuffs being caught therein or moving therethrough. Similarly, in light of the sloping portions immediately adjacent the various drainage openings, there is no tendency for a clogging of these recesses as might prevent the desired drainage.

The stem handle 48, integral with the base 50, is hollow and tapers slightly upwardly from the base 50 to the open upper end 60 of the handle located at a height generally coextensive with the outwardly flaring receptacle rim 24 when the carrier 14 is fully seated within the receptacle. The upper section of the handle 48, at diametrically opposed positions, is provided with a pair of recesses 62 which receive the fingers of a user for a non-slip manipulation of the handle, and hence the carrier. It will be appreciated that the gripping recesses 62 are positioned for easy access thereto even within a filled receptacle. It will also be recognized that the use of a single central handle, in the nature of a vertical stem, allows for free access to the interior to the container completely thereabout, as compared to a bail handle which both restricts access from the side of the container and the top of the container.

The handle 48 is completed by a pair of vertical slots 64 diametrically opposed from each other and 90° removed from the recesses 62.

Removal of foodstuff, normally relatively small or awkward individual pieces, from pickle containers and the like, is usually facilitated by a fork or pick. The container 10 of the invention includes a dispensing implement 66 which is removable stored within the hollow handle 48 in a cooperative manner. The implement 66, which can be considered a two-prong fork, includes a vertically elongate body 68 semi-circular cross-section with transversely opposed flat elongate edges 70 which terminate in a pair of tapered depending prongs 72 having opposed inwardly directed gripping lugs 74. The vertically elongate body 68 is sharply upwardly beveled, as at 76, from the lower ends of the edges 70 to define an opening 78 between the lower portions of the edges 70 which in turn forms the prongs 72. It is contemplated that the prongs 72 be of sufficient rigidity as-to appropriately "spear" the foodstuff for removal. Similarly, the prongs can have a slight degree of resilient flexibility to provide a gripping action.

The upper portion of the implement 66 includes a top cap 84 and is provided with a pair of laterally projecting coplanar wings or projections 80 which are generally in the plane of the forward vertical edges 70 and joined by an intermediate portion 86 extending diametrically across the cap 84. The projections include outer edges 82 with a wave-like configuration of alternating depressions and extensions to facilitate a grasping thereof.

The diameter of the fork implement 66, in the plane of the longitudinal edges 70 thereof, is such as to allow the implement to be closely although slidably received within the handle 48 through the open upper end 60 thereof. The projections 80, in turn, are received within the opposed handle slots 64 which are of a depth sufficient to receive the projections 80 substantially fully therein with the top cap 84 of the implement body 68 aligned with and closing the upper end 60 of the handle 48. Once fully received within the opposed slots 64, the implement projections 80 can actually be used as an assist in rotating the carrier to and from its dispensing position above the receptacle ribs 26.

As the implement is to be closely received within the handle 48, the semi-cylindrical wall of the body 68, along the rear face thereof opposed from the plane of the forward edges 70, is provided with a substantially full height flat portion 88, forming a minor space between the implement and the inner surface of the handle 48 to avoid any tendency of the implement 68 jamming within the handle 48.

As will be appreciated from Figures 1 and 2, the nested implement has the upper end generally aligned with or only very slightly above the upper edge of the receptacle 12. As such, there is no interference with the mounting of a removable lid over the receptacle. While no such lid has been illustrated, a lid for the container would preferably be configured in the manner of the lid in the above referred to patent to DeCoster 5,082,135.

As will be recognized, the range of foodstuffs which can be accommodated in the container 10 is limited only by size, and can vary, as an example, from pickles or olives in a preservative, to cherries or food slices in an appropriate syrup. The components of the container, that is the receptacle, carrier and fork implement, are completely separable for cleaning purposes, and the receptacle itself is of an attractive appearance complementing tableware for use as a serving dish.

The foregoing is considered illustrative of the principals of the invention. As variations and modifications, within the parameters of the invention, may occur to those skilled in the art, it is not desired to limit the invention to the exact construction and manner of use specifically described.

The features disclosed in the foregoing description, in the following claims and/or in the accompanying drawings may, both separately and in any combination thereof, be material for realising the invention in diverse forms thereof.

## Claims

1. A food storing and dispensing container (10) comprising a receptacle (12) including a vertically extending peripheral wall (20), a closed bottom (18) and an open top (22), said peripheral wall and bottom defining a receptacle interior, a carrier (14) vertically slidable within said receptacle interior between a storage position adjacent said receptacle bottom and a dispensing position vertically spaced above said receptacle bottom, said carrier including a bottom (38) and a handle (48) affixed centrally to said carrier bottom (38) and extending vertically therefrom, **characterised in that** said handle (48) is hollow and includes an open upper end, and an implement (16) is provided for engaging and lifting foodstuff from said receptacle interior, said implement being slidably received within said hollow handle (48) through the open upper end thereof, and means (64, 80) being provided on said handle and said implement for limiting relative movement therebetween when said implement is received within said handle.

2. The container of claim 1 wherein said means for limiting relative movement comprises a pair of spaced slots (64) in said handle extending downward from said open upper end thereof, said implement (16) including an upper portion with laterally extending projections (80) thereon received within said slots (64) and extending laterally beyond said handle (48) whereby relative rotation between said implement (16) and said handle (48) is precluded.

3. The container of claim 2 wherein said implement (16) includes a lower end portion with longitudinally extending prongs (72) defined thereon, said implement, upward from said prongs, having a substantially semi-circular cross-section.

4. A food storing and dispensing container according to any of claims 1 to 3, wherein said carrier includes a peripheral wall (42) fixed to said carrier bottom and extending upwardly therefrom to define an upwardly opening chamber, the container including shoulder means (30) on said receptacle wall (20) inwardly directed into said receptacle interior and in vertically spaced relation above said receptacle bottom for selectively receiving said carrier bottom thereon and supporting said carrier in said dispensing position vertically spaced above said receptacle bottom.

5. The container of claim 4 including guide means (26, 44) on said receptacle and carrier for stabilizing and guiding said carrier during movement of said carrier from said receptacle bottom to said storage position, said carrier, above said shoulder means (30) being rotatable relative to said receptacle for supporting engagement of said carrier bottom on said shoulder means.

6. The container of claim 5, wherein said guide means comprises a plurality of vertically extending ribs (26) on said receptacle wall projecting into the interior of said receptacle, said carrier wall having recesses (44) therein receiving said ribs and providing guided sliding movement between said carrier and said receptacle along the vertical extent of said ribs, said recess-received ribs precluding rotation of said carrier relative to said receptacle.

7. The container of claim 6, wherein said ribs (26) terminate in upper ends defining said shoulder means (30), said carrier bottom to each side of each of said recesses (44) extending radially beyond said recess and engageable on said shoulder means (30) upon rotation of said carrier above said shoulder means.

8. The container of claim 7, wherein said handle (48) extends upwardly beyond said carrier wall and terminates in an upper portion with a manually grippable exterior, and the carrier bottom (38) has drainage apertures (52) therethrough.

9. The container of claim 8, wherein said handle (48) includes an upwardly domed base (50), said drainage apertures (52) being defined below said domed base, with said domed base (50) being rigidly connected with said carrier bottom (38) radially outward of said drainage apertures (52) by a plurality of radially extending bridging portions (54) on said base which retain a central portion of said base above said receptacle bottom.

10. The container of claim 9 including additional drainage apertures (58) peripherally about said carrier bottom and radially aligned immediately inward of said recesses (44).

11. The container of claim 10 wherein said receptacle bottom is upwardly convex and said carrier bottom is downwardly convex whereby an annular space is defined between said bottoms with said carrier in its stored position.

12. The container of claim 2 wherein a manually grippable exterior of an upper portion of said handle (48), at opposed points circumferentially removed from said slots, includes finger-accommodating recesses (62) for facilitating the manipulation of said handle and said carrier.

13. The container of claim 7 wherein said peripheral wall (20) of said receptacle includes a transparent window (32) therein vertically above each of said ribs (26).

## Patentansprüche

1. Lebensmittelaufbewahrungs- und -entnahmebehälter (10), der ein Aufnahmegefäß (12) umfaßt, welches eine sich vertikal erstreckende Umfangswand (20), einen geschlossenen Boden (18) und ein offenes oberes Ende (22) einschließt, wobei besagte Umfangswand und besagter Boden ein Aufnahmegefäßinneres definieren, wobei ein Träger (14), der in besagtem Aufnahmegefäßinneren zwischen einer Aufbewahrungsstellung benachbart zu besagtem Aufnahmegefäßboden und einer Entnahmestellung mit vertikalem Abstand oberhalb besagten Aufnahmegefäßbodens vertikal verschiebbar ist, wobei besagter Träger einen Boden (38) und einen Griff (48) einschließt, der mittig an besagtem Trägerboden (38) befestigt ist und sich vertikal von diesem erstreckt, **dadurch gekennzeichnet, daß** besagter Griff (48) hohl ist und ein offenes oberes Ende einschließt und daß eine Gerätschaft (16) zum Ergreifen und Herausnehmen von Lebensmittel aus besagtem Aufnahmegefäßinneren vorgesehen ist, wobei besagte Gerätschaft in besagtem hohlen Griff (48) durch das offene obere Ende desselben verschiebbar aufgenommen ist und Mittel (64, 80) auf besagtem Griff und besagter Gerätschaft vorgesehen sind zum Begrenzen der relativen Bewegung dazwischen, wenn besagte Gerätschaft in besagtem Griff aufgenommen ist.

2. Behälter nach Anspruch 1, **dadurch gekennzeichnet, daß** besagte Mittel zur Begrenzung der relativen Bewegung ein Paar von mit Abstand angeordneten Schlitzen (64) in besagtem Griff umfassen, die sich von besagtem offenen oberen Ende desselben nach unten erstrecken, wobei besagte Gerätschaft (16) einen oberen Abschnitt mit sich quer erstreckenden Vorsprüngen (80) darauf einschließt, die in besagten Schlitzen (64) aufgenommen sind und sich quer über besagten Griff (48) hinaus erstrecken, wodurch relative Drehung zwischen besagter Gerätschaft (16) und besagtem Griff (48) ausgeschlossen wird.

3. Behälter nach Anspruch 2, **dadurch gekennzeichnet, daß** besagte Gerätschaft (16) einen unteren Endabschnitt mit sich in Längsrichtung erstreckenden Zinken (72), die darauf definiert sind, einschließt, wobei besagte Gerätschart, oberhalb von besagten Zinken, einen im wesentlichen halbkreisförmigen Querschnitt aufweist.

4. Lebensmittelaufbewahrungs- und -entnahmebehälter nach einem der Ansprüche 1 bis 3, **dadurch gekennzeichnet, daß** besagter Träger eine Umfangswand (42) einschließt, die an besagtem Trägerboden befestigt ist und sich von diesem nach oben erstreckt, um eine sich nach oben öffnende Kammer zu definieren, wobei der Behälter Schultermittel (30) auf besagter Aufnahmegefäßwand (20) einschließt, die in besagtes Aufnahmegefäßinnere hinein gerichtet und in vertikalem Abstand oberhalb besagten Aufnahmegefäßbodens angeordnet sind, zur selektiven Aufnahme besagten Trägerbodens darauf und Abstützen besagten Trägers in besagter Entnahmestellung mit vertikalem Abstand oberhalb besagten Aufnahmegefäßbodens.

5. Behälter nach Anspruch 4, **gekennzeichnet durch** Führungsmittel (26, 44) auf besagtem Aufnahmegefäß und Träger zum Stabilisieren und Führen besagten Trägers während der Bewegung besagten Trägers von besagtem Aufnahmegefäßboden in besagte Aufbewahrungsstellung, wobei besagter Träger oberhalb besagter Schultermittel (30) relativ zu besagtem Aufnahmegefäß zum abstützenden Eingriff besagten Trägerbodens auf besagten Schultermitteln drehbar ist.

6. Behälter nach Anspruch 5, **dadurch gekennzeichnet, daß** besagte Führungsmittel eine Mehrzahl von sich vertikal erstreckenden Rippen (26) auf besagter Aufnahmegefäßwand umfassen, die sich in das Innere besagten Aufnahmegefäßes hinein erstrecken, wobei besagte Trägerwand Ausnehmungen (44) darin aufweist, die besagte Rippen aufnehmen und eine geführte Gleitbewegung zwischen besagtem Träger und besagtem Aufnahmegefäß entlang der vertikalen Erstreckung besagter Rippen bereitstellt, wobei besagte in den Ausnehmungen aufgenommene Rippen eine Drehung besagten Trägers relativ zu besagtem Aufnahmegefäß ausschließen.

7. Behälter nach Anspruch 6, **dadurch gekennzeichnet, daß** besagte Rippen (26) in oberen Enden enden, die besagte Schultermittel (30) definieren, wobei besagter Trägerboden zu jeder Seite jeder der besagten Ausnehmungen (44) sich radial über besagte Ausnehmungen hinaus erstreckt und auf besagten Schultermitteln (30) in Eingriff bringbar ist.

8. Behälter nach Anspruch 7, **dadurch gekennzeichnet, daß** besagter Griff (48) sich über besagte Trägerwand nach oben hinaus erstreckt und in einem oberen Abschnitt mit einem von Hand greifbaren Äußeren endet und der Trägerboden (38) Ablaufäffnungen (52) dort hindurch aufweist.

9. Behälter nach Anspruch 8, **dadurch gekennzeichnet, daß** besagter Griff (48) eine nach oben kugelförmig gewölbte Basis (50) einschließt, wobei besagte Ablauföffnungen (52) unterhalb besagter kuppelförmig gewölbten Basis definiert sind, wobei besagte kuppelförmig gewölbte Basis (50) mit besagtem Trägerboden (38) radial nach außen von besagten Ablauföffnungen (52) starr verbunden ist durch eine Mehrzahl von sich radial erstreckenden Brückenabschnitten (54) auf besagter Basis, die einen zentralen Bereich besagter Basis oberhalb besagten Aufnahmegefäßbodens erhalten.

10. Behälter nach Anspruch 9, **gekennzeichnet durch** zusätzliche Ablauföffnungen (58) um den Umfang besagten Trägerbodens herum und radial fluchtend unmittelbar einwärts besagter Ausnehmungen (44).

11. Behälter nach Anspruch 10, **dadurch gekennzeichnet, daß** besagter Aufhahmegefäßboden nach oben hin konvex ist und besagter Trägerboden nach unten hin konvex ist, wodurch ein ringförmiger Zwischenraum zwischen besagten Böden definiert ist, wenn besagter Träger sich in seiner Aufbewahrungsstellung befindet.

12. Behälter nach Anspruch 2, **dadurch gekennzeichnet, daß** ein von Hand greifbares Äußeres des oberen Abschnittes besagten Griffes (48), an gegenüberliegenden Punkten umfangsmäßig versetzt von besagten Schlitzen, Finger aufnehmende Ausnehmungen (62) zur Erleichterung der Handhabung besagten Griffes und besagten Trägers einschließt.

13. Behälter nach Anspruch 7, **dadurch gekennzeichnet, daß** besagte Umfangswand (20) besagten Aufnahmegefäßes ein durchsichtiges Fenster (32) darin vertikal oberhalb jeder der besagten Rippen (26) einschließt.

## Revendications

1. Récipient de stockage et de distribution d'aliments (10) comprenant un réceptacle (12) doté d'une paroi périphérique (20) s'étendant verticalement, d'un fond fermé (18) et d'un dessus ouvert (22), ladite paroi périphérique et ledit fond définissant un intérieur de réceptacle, un entraîneur (14) pouvant coulisser verticalement dans ledit intérieur de réceptacle entre une position de stockage adjacente audit fond du réceptacle et une position de distribution espacée dans le sens vertical au-dessus dudit fond du réceptacle, ledit entraîneur comprenant un fond (38) et une poignée de manoeuvre (48) fixée au centre sur ledit fond de l'entraîneur (38) et s'étendant verticalement depuis celui-ci, **caractérisé en ce que** ladite poignée de manoeuvre (48) est creuse et comporte une extrémité supérieure ouverte, et un accessoire (16) est prévu pour s'engager avec les aliments et les soulever dudit intérieur de réceptacle, ledit accessoire pouvant être logé de manière coulissante dans ladite poignée de manoeuvre creuse (48) par son extrémité supérieure ouverte, et des moyens (64, 80) sont prévus sur ladite poignée de manoeuvre et sur ledit accessoire pour limiter un mouvement relatif entre les deux lorsque ledit accessoire est logé dans ladite poignée de manoeuvre.

2. Récipient selon la revendication 1, dans lequel lesdits moyens destinés à limiter un mouvement relatif comprennent une paire de fentes espacées (64) situées dans ladite poignée de manoeuvre s'étendant vers le bas depuis son extrémité supérieure ouverte, ledit accessoire (16) comprenant une portion supérieure, sur laquelle des saillies (80) s'étendent latéralement, logée dans lesdites fentes (64) et s'étendant latéralement au-delà de ladite poignée de manoeuvre (48), ce qui empêche toute rotation relative entre ledit accessoire (16) et ladite poignée de manoeuvre (48).

3. Récipient selon la revendication 2, dans lequel ledit accessoire (16) comprend une portion d'extrémité inférieure sur laquelle des griffes (72) s'étendant longitudinalement sont définies, ledit accessoire ayant, au-dessus desdites griffes, une section transversale essentiellement semi-circulaire.

4. Récipient de stockage et de distribution d'aliments selon l'une quelconque des revendications 1 à 3, dans lequel ledit entraîneur comprend une paroi périphérique (42) fixée sur ledit fond de l'entraîneur et s'étendant vers le haut depuis celui-ci pour définir une chambre s'ouvrant vers le haut, le récipient comprenant un moyen formant épaulement (30) situé sur ladite paroi (20) du réceptacle, dirigé vers l'intérieur dans ledit intérieur du réceptacle et espacé dans le sens vertical au-dessus dudit fond du réceptacle de façon à recevoir de manière sélective ledit fond de l'entraîneur et à supporter ledit entraîneur dans ladite position de distribution espacée verticalement au-dessus dudit fond du réceptacle.

5. Récipient selon la revendication 4, comprenant des moyens de guidage (26, 44) placés sur ledit réceptacle et sur ledit entraîneur pour stabiliser et guider ledit entraîneur pendant son mouvement depuis ledit fond du réceptacle vers ladite position de stockage, ledit entraîneur, au-dessus dudit moyen formant épaulement (30), pouvant tourner par rapport audit réceptacle afin de permettre l'engagement dudit fond de l'entraîneur sur ledit moyen formant épaulement.

6. Récipient selon la revendication 5, dans lequel lesdits moyens de guidage comprennent une pluralité de nervures (26) s'étendant verticalement sur ladite paroi du réceptacle, avançant à l'intérieur dudit réceptacle, ladite paroi de l'entraîneur ayant des évidements (44) recevant lesdites nervures et assurant un mouvement coulissant guidé entre ledit entraîneur et ledit réceptacle le long de l'extension verticale desdites nervures, lesdites nervures logées dans les évidements empêchant la rotation dudit entraîneur par rapport audit réceptacle.

7. Récipient selon la revendication 6, dans lequel lesdites nervures (26) se terminent par des extrémités supérieures définissant ledit moyen formant épaulement (30), ledit fond de l'entraîneur sur chaque côté de chacun desdits évidements (44) s'étendant dans le sens radial au-delà dudit évidement et pouvant s'engager sur ledit moyen formant épaulement (30) lors de la rotation dudit entraîneur au-dessus dudit moyen formant épaulement.

8. Récipient selon la revendication 7, dans lequel ladite poignée de manoeuvre (48) s'étend vers le haut au-delà de ladite paroi de l'entraîneur et se termine par une portion supérieure comportant une partie extérieure pouvant être saisie à la main, et le fond de l'entraîneur (38) est traversé par des ouvertures d'écoulement (52).

9. Récipient selon la revendication 8, dans lequel ladite poignée de manoeuvre (48) comprend une base en forme de dôme dirigé vers le haut (50), lesdites ouvertures d'écoulement (52) étant définies sous ladite base en forme de dôme, cette dernière étant reliée de manière rigide au fond de l'entraîneur (38) dans le sens radial vers l'extérieur desdites ouvertures d'écoulement (52) par une pluralité de portions formant pont (54) s'étendant dans le sens radial sur ladite base, qui retiennent une portion centrale de ladite base au-dessus dudit fond du réceptacle.

10. Récipient selon la revendication 9, comprenant des ouvertures d'écoulement supplémentaires (58) située sur la périphérie dudit fond de l'entraîneur et alignées dans le sens radial juste à l'intérieur desdits évidements (44).

11. Récipient selon la revendication 10, dans lequel ledit fond du réceptacle est convexe vers le haut et ledit fond de l'entraîneur est convexe vers le bas, ce qui fait qu'un espace annulaire est défini entre lesdits fonds lorsque ledit entraîneur est dans sa position de stockage.

12. Récipient selon la revendication 2, dans lequel une partie extérieure pouvant être saisie à la main d'une portion supérieure de ladite poignée de manoeuvre (48) comprend des évidements destinés à recevoir des doigts, retirés desdites fentes en des emplacements opposés sur la circonférence, afin de faciliter la manipulation de ladite poignée de manoeuvre et dudit entraîneur.

13. Récipient selon la revendication 7, dans lequel ladite paroi périphérique (20) dudit réceptacle inclut une fenêtre transparente (32) placée verticalement au-dessus de chacune desdites nervures (26).
